# EUROPEAN PATENT APPLICATION

(11) **EP 4 075 841 A1**
(43) Date of publication of application: **19.10.2022**
(21) Application number: 19955474.2
(22) Date of filing: 12.12.2019
(51) Int. Cl.: H04W 8/22, H04W 52/04

(54) **TERMINAL AND WIRELESS COMMUNICATION METHOD**

(71) Applicant: NTT DOCOMO, INC., Chiyoda-Ku Tokyo 100-6150 (JP)
(72) Inventor: OKAMURA, Masaya, Tokyo 100-6150 (JP); MATSUMURA, Yuki, Tokyo 100-6150 (JP); NAGATA, Satoshi, Tokyo 100-6150 (JP)
(74) Representative: Hoffmann Eitle
(86) International application number: PCT/JP2019/048748
(87) International publication number: WO 2021/117193

(57) **Abstract**

A terminal according to an aspect of the present disclosure includes: a transmission section that transmits mode 2 capability information indicating that mode 2 of full power transmission is supported; and a control section that, in a case where the mode 2 capability information is transmitted and transmitted precoding matrix indicator (TPMI) group capability information regarding a TPMI group is not transmitted, assumes that a number of SRS ports = 1 is configured for at least one SRS resource included in a measurement reference signal (sounding reference signal (SRS)) resource set of which usage is a codebook. According to one aspect of the present disclosure, it is possible to control full power transmission appropriately.

## Description

### Technical Field

The present disclosure relates to a terminal and a radio communication method in next-generation mobile communication systems.

### Background Art

In the universal mobile telecommunications system (UMTS) network, the specifications of long term evolution (LTE) have been drafted for the purpose of further increasing data rates, providing low delays, and so on (see Non Patent Literature 1). In addition, the specifications of LTE-Advanced (third generation partnership project (3GPP) Release (Rel) 10 to 14) have been drafted for the purpose of further increasing capacity and advancement of LTE(3GPP Rel. 8 and 9).

Successor systems to LTE (for example, also referred to as 5th generation mobile communication system (5G), 5G+ (plus), New Radio (NR), or 3GPP Rel. 15 or later) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In NR, the capability of a user terminal (a terminal or user equipment (UE)) related to codebook-based full power UL transmission using a plurality of power amplifiers (PAs) has been studied. Discussions for NR so far has proposed UE capabilities 1 to 3, as follows:
- UE capability 1: PAs that can output the maximum rated power (full rated PAs) are supported (included) on each transmission chain (Tx chain)
- UE capability 2: no Tx chain supports full rated PA
- UE capability 3: subset (a part) of Tx chains supports full rated PA

Further, configuring a UE supporting UE capability 2 or 3 to operate in at least one of two modes (modes 1 and 2) for full power transmission has been considered. In Rel-16 NR, a UE reporting UE capability information indicating support for operating in mode 1, reporting UE capability information indicating support for operating in mode 2, or reporting UE capability information regarding a TPMI set (may be referred to as TPMI group) capable of full power transmission in relation to mode 2 has been considered.

However, whether or not the UE needs to necessarily transmit capability information regarding a TPMI group has not yet been studied. In a case where the capability information is not transmitted, to the extent of the specification studies so far, the UE cannot appropriately perform full power transmission. The inability to perform full power transmission may cause, for example, a decrease in coverage, which leads to difficulty in an increase in communication throughput.

Thus, the present disclosure intends to provide a terminal and radio communication method capable of controlling full power transmission appropriately.

### Solution to Problem

A terminal according to an aspect of the present disclosure includes: a transmission section that transmits mode 2 capability information indicating that mode 2 of full power transmission is supported; and a control section that, in a case where the mode 2 capability information is transmitted and transmitted precoding matrix indicator (TPMI) group capability information regarding a TPMI group is not transmitted, assumes that a number of SRS ports = 1 is configured for at least one SRS resource included in a measurement reference signal (sounding reference signal (SRS)) resource set of which usage is a codebook.

### Advantageous Effects of Invention

According to one aspect of the present disclosure, it is possible to control full power transmission appropriately.

### Brief Description of Drawings

Fig. 1 is a diagram showing an example of association between a precoder type and a TPMI index.
Fig. 2 is a diagram illustrating the exemplary configuration of UEs assuming the full power transmission-related UE capabilities 1 to 3.
Figs. 3A and 3B are diagrams illustrating examples of TPMI groups.
Figs. 4A and 4B are diagrams illustrating examples of TPMIs for which full power transmission is assumed.
Fig. 5 is a diagram illustrating an example of TPMI groups indicated by TPMI group capability information.
Fig. 6 is a diagram illustrating examples of a PA configuration of UE corresponding to each group or a combination of groups.
Fig. 7 is a diagram illustrating an example of a schematic configuration of a radio communication system according to one embodiment.
Fig. 8 is a diagram illustrating an example of a configuration of a base station according to one embodiment.
Fig. 9 is a diagram illustrating an example of a configuration of a user terminal according to one embodiment.
Fig. 10 is a diagram illustrating an example of a hardware configuration of the base station and the user terminal according to one embodiment.

### Description of Embodiments

### (PUSCH Precoder)

In the NR, it is considered that the UE will support at least one of codebook (CB)-based transmission and non-codebook (NCB)-based transmission.

For example, it is considered that the UE uses at least a measurement reference signal (Sounding Reference Signal (SRS)) Resource Index (SRI) to determine a precoder (precoding matrix) for at least one of CB-based and NCB-based uplink shared channel (Physical Uplink Shared Channel (PUSCH)) transmissions.

In the case of CB-based transmission, the UE may determine the precoder for PUSCH transmission based on SRI, Transmitted Rank Indicator (TRI), Transmitted Precoding Matrix Indicator (TPMI) or the like. For the NCB-based transmission, the UE may determine a precoder for PUSCH transmission based on the SRI.

SRI, TRI, TPMI, or the like may be notified to the UE using downlink control information (DCI). The SRI may be specified by an SRS Resource Indicator field (SRI field) of the DCI, or may be specified by a parameter "srs-ResourceIndicator" included in an RRC information element "ConfiguredGrantConfig" of a configured grant PUSCH (configured grant PUSCH). The TRI and the TPMI may be specified by precoding information of the DCI and a layer number field ("Precoding information and number of layers" field).

The UE may report UE capability information regarding the precoder type, and the precoder type based on the UE capability information may be configured by higher layer signaling from the base station. The UE capability information may be precoder type information (may be represented by the RRC parameter "pusch-TransCoherence") used by the UE in PUSCH transmission.

In the present disclosure, higher layer signaling may be, for example, any of radio resource control (RRC) signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), or the like.

The UE may determine the precoder used for PUSCH transmission based on the precoder type information (which may be represented by the RRC parameter "codebookSubset") contained in the PUSCH configuration information ("PUSCH-Config" information element of RRC signaling) notified by higher layer signaling. The UE may be configured with a subset of the PMI specified by the TPMI by the codebookSubset.

The precoder type may be designated by any of full coherent, fully coherent, coherent, partial coherent, non-coherent, or a combination of at least two of them (for example, which may be represented by parameters such as "fullyAndPartialAndNonCoherent", "partialAndNonCoherent").

Full coherent may mean that the all antenna ports used for transmission are synchronized (may be expressed as phase-matched, the same precoder applied, etc.). Partial coherent may mean that some port of the antenna ports used for transmission are synchronized, but that some port and other ports cannot be synchronized. Non-coherent may mean that each antenna port used for transmission cannot be synchronized.

A UE that supports a fully coherent precoder type may be assumed to support partial coherent and non-coherent precoder types. A UE that supports a partial coherent precoder type may be assumed to support a non-coherent precoder type.

The precoder type may be read as coherency, PUSCH transmission coherence, coherent type, coherence type, codebook type, codebook subset, codebook subset type, and the like.

The UE may determine the precoding matrix corresponding to a TPMI index obtained from the DCI that schedules UL transmission (for example, DCI format 0_1. the same applies hereinafter) from multiple precoders (may be referred to as precoding matrices, a codebook, or the like) for CB-based transmission.

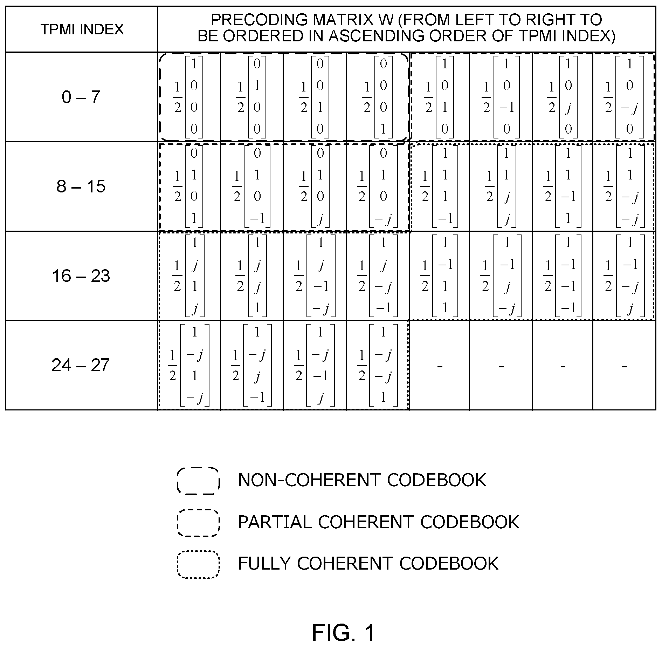

Fig. 1 is a diagram showing an example of association between a precoder type and a TPMI index. Fig. 1 is a table showing the precoding matrix W for transmission in a single layer using four antenna ports in discrete Fourier transform spread OFDM (DFT-s-OFDM) (with transform precoding enabled).

In Fig. 1, if the precoder type (codebookSubset) is fullyAndPartialAndNonCoherent, the UE is notified with a TPMI of 0 to 27 for a single layer transmission. In addition, if the precoder type is partialAndNonCoherent, the UE is configured with a TPMI of 0 to 11 for a single layer transmission. If the precoder type is nonCoherent, the UE is configured with any of TPMI of 0 to 3 for a single layer transmission.

Fig. 1 is a table defined currently in Rel-15 NR. In this table, if a fully coherent transmit power corresponding to index #12 to #27 is assumed to be 1 (= (1/2)² * 4), a partial coherent transmit power corresponding to index #4 to #11 is 1/2 (= (1/2)² * 2), and a non-coherent transmit power corresponding to index #0 to #3 is 1/4 (= (1/2)² * 1).

In other words, according to the current Rel-15 NR specifications, the use of a part of codebooks in a UE performing codebook-based transmission using a plurality of ports has smaller transmission power than that of the transmission using a single port in some cases (full power transmission is unable).

Moreover, as illustrated in Fig. 1, the precoding matrix in which only one of the components in respective columns is non-zero can be referred to as a non-coherent codebook. The precoding matrix in which the predetermined number (but not all) of components in respective columns is non-zero can be referred to as a partial coherent codebook. The precoding matrix in which all components in respective columns are non-zeros can be referred to as a fully coherent codebook.

The non-coherent codebook and the partial coherent codebook can also be referred to as an antenna selection precoder. The fully coherent codebook can also be referred to as a non-antenna selection precoder.

Moreover, in the present disclosure, the partial coherent codebook can be a codebook (i.e., codebooks of TPMIs = 4 to 11 for single-layer transmission using four antenna ports) obtained by excluding codebooks corresponding to TPMIs specifying a UE configured with a non-coherent codebook subset (e.g., RRC parameter "codebookSubset" = "nonCoherent") among codebooks (precoding matrix) corresponding to TPMIs specifying a UE configured with a partial coherent codebook subset (e.g., RRC parameter "codebookSubset" = "partialAndNonCoherent") by DCI for codebook-based transmission.

Moreover, in the present disclosure, the fully coherent codebook can be a codebook (i.e., codebooks of TPMIs = 12 to 27 for single-layer transmission using four antenna ports) obtained by excluding codebooks corresponding to TPMIs specifying a UE configured with a partial coherent codebook subset (e.g., RRC parameter "codebookSubset" = "partialAndNonCoherent") among codebooks (precoding matrix) corresponding to TPMIs specifying a UE configured with a fully coherent codebook subset (e.g., RRC parameter "codebookSubset" = "fullyAndPartialAndNonCoherent") by DCI for codebook-based transmission.

### (UE capability for full power transmission)

Even when the codebook is used, it is preferable to perform full power UL transmission appropriately. Therefore, in NR, the UE capability related to codebook-based full power UL transmission using a plurality of power amplifiers (PAs) has been studied. Discussions for NR so far has proposed UE capabilities 1 to 3, as follows:
- UE capability 1: PAs that can output the maximum rated power (full rated PAs) are supported (included) on each transmission chain (Tx chain)
- UE capability 2: no Tx chain supports full rated PA
- UE capability 3: subset (a part) of Tx chains supports full rated PA

Moreover, a UE having at least one of the UE capabilities 1 to 3 can mean that the UE supports UL full power transmission. The UE can report capability information indicating that it supports the UL full power transmission capability to a network (e.g., a base station), in addition to or apart from UE capabilities 1 to 3. The configuring of a UE supporting full power transmission can be made from the network.

The UE capability 1, 2, or 3 can be replaced with a full power transmission-related UE capability 1, 2, or 3, a full power transmission type 1, 2, or 3, an electric power allocation type 1, 2, or 3, and so on. In the present disclosure, the terms of type, mode, capability, or the like can be used interchangeably. In addition, in the present disclosure, such numerals of 1, 2, or 3 can be used interchangeably as an optional set of numerals or characters, such as A, B, or C.

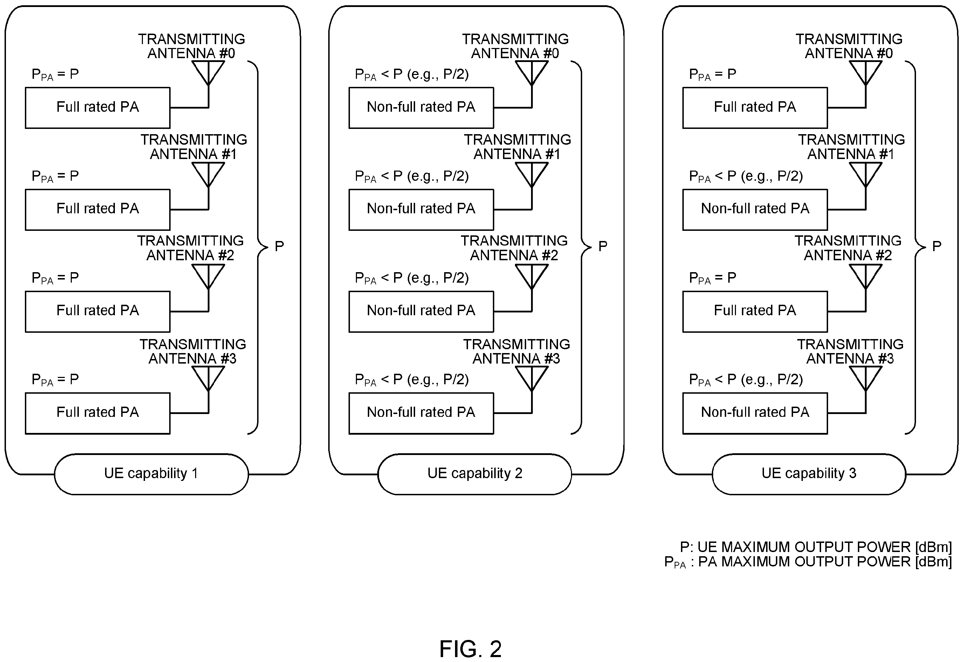

Fig. 2 is a diagram illustrating the exemplary configuration of UEs assuming the full power transmission-related UE capabilities 1 to 3. Fig. 2 illustrates in a simplified form only a PA and a transmitting antenna port (it can be replaced with a transmitting antenna) of the configuration of a UE. Moreover, this exemplary illustration shows that the number of PAs and the number of transmitting antenna ports are four, but not limited to this number.

Moreover, P indicates the UE maximum output power [dBm], and P_{PA} indicates the PA maximum output power [dBm]. Furthermore, P can be, for example, 23 dBm for a UE with power class 3 and 26 dBm for a UE with power class 2. Although P_{PA} ≤ P is assumed in the present disclosure, an embodiment of the present disclosure is applicable to a case of P_{PA} > P.

The configuration of UE capability 1 is expected to be costly to implement, but its full power transmission is possible using one or more optional antenna ports. The configuration of UE capability 2 includes only non-full rated PA and is expected to be implementable at a lower cost, but fails to perform the full power transmission using only one antenna port, so the phase, amplitude, or the like of the signal input to each PA is necessary to be controlled.

The configuration of UE capability 3 has a mixed form between the configuration of UE capability 1 and the configuration of UE capability 2. Antenna ports capable of full-power transmission (transmitting antennas #0 and #2 in this example) and antenna ports not capable of full-power transmission (transmitting antennas #1 and #3 in this example) are mixed.

Moreover, the index, number, or the like of antenna ports capable of full power transmission of UE capability 3 is not limited to this illustrated example. In addition, in this example, it is assumed that P_{PA} = P / 2 of the non-full rated PA, but the value of P_{PA} is not limited to this exemplary value.

Meanwhile, configuring a UE supporting UE capability 2 or 3 to operate in at least one of two modes (modes 1 and 2) for full power transmission has been considered. The modes 1 and 2 may be referred to as operation modes 1 and 2, respectively.

Here, mode 1 can be a mode in which a UE is configured so that one or more SRS resources included in one SRS resource set whose usage is "codebook" have the same number of SRS ports (e.g., may be referred to as the first full power transmission mode). The UE operating in mode 1 can perform full power transmission using the entire antenna ports.

The UE operating in mode 1 can be configured by the network in such a way as to use a subset of TPMIs used to combine ports within one layer to achieve full power transmission. A new codebook subset can be introduced only for a rank value, which includes a TPMI precoder corresponding to "fullyAndPartialAndNonCoherent" defined in Rel-15 NR but is not available for full power transmission.

On the other hand, the mode 2 can herein be a mode in which a UE is configured so that one or more SRS resources included in one SRS resource set whose usage is "codebook" have the different number of SRS ports (e.g., may be referred to as the second full power transmission mode). The UE operating in mode 2 can perform full power transmission using not the entire antenna ports but a part of antenna ports.

The UE operating in mode 2 can transmit PUSCH and SRS in the same way regardless of the availability of antenna virtualization. The UE in mode 2 can be notified of a set of TPMIs to achieve full power transmission because of supporting more SRS resources than one port. In the case of mode 2, two or three SRS resources can be configured for each SRS resource set (up to two for Rel-15 NR) .

Mode 1 has the advantage that the required SRI field size can be smaller than that of mode 2 (full power transmission is possible with one SRS resource).

Mode 2 has the advantage that single port transmission and multiport transmission are dynamically switchable by DCI compared to mode 1. In addition, full power transmission is achievable with some antenna ports, and so, for example, it is possible to perform full power transmission using only an antenna provided with a full rated PA or using only a coherent antenna.

Moreover, the UE can determine a mode to be used for PUSCH transmission on the basis of higher layer signaling (e.g., RRC signaling), physical layer signaling (e.g., DCI), or a combination thereof. In other words, the UE can be configured or indicated with a mode for PUSCH transmission.

In Rel-16 NR, a UE reporting UE capability information indicating support for operating in mode 1, reporting UE capability information indicating support for operating in mode 2, or reporting UE capability information regarding a TPMI set (may be referred to as TPMI group) capable of full power transmission in relation to mode 2 has been considered.

Further, for mode 2, use of a codebook and a codebook subset of Rel. 15 NR is studied.

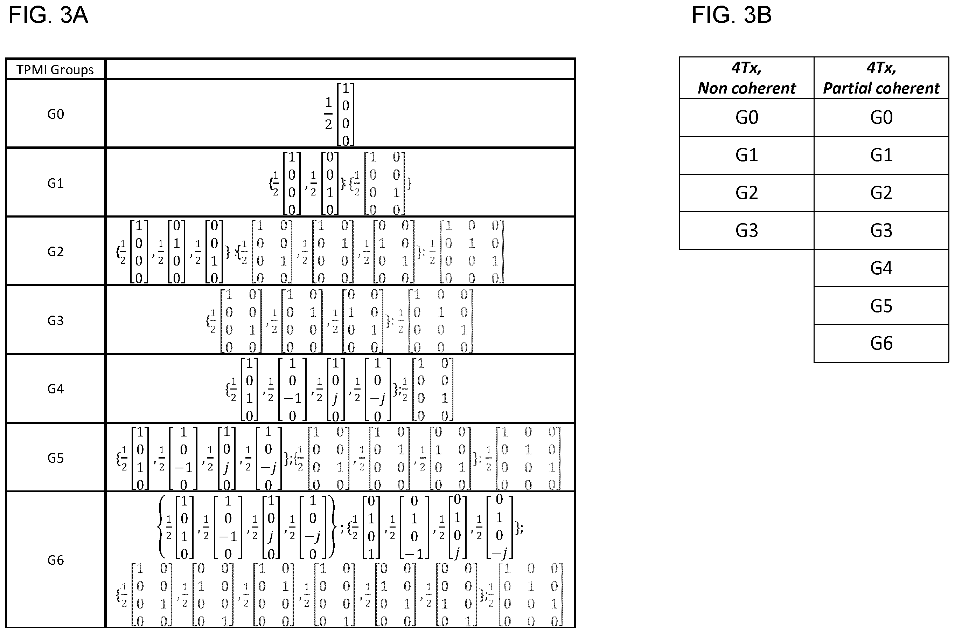

Figs. 3A and 3B are diagrams illustrating examples of TPMI groups. Fig. 3A shows precoding matrices (precoders) of each rank corresponding to TPMI groups in a case where the number of transmission antenna ports is 4. In this example, precoders allowing full power transmission for a rank are one or more precoders within a range partitioned by at least one of a colon ":" and a semicolon ";" . Note that in a case where precoders allowing full power transmission for a rank have a plurality of precoders surrounded by "{}", full power transmission can be performed for the rank by using any of the plurality of precoders. The number of columns in each matrix may represent the number of layers.

Fig. 3B illustrates examples of TPMI groups assumed in a UE of 4 transmission antenna ports. In this example, a non-coherent UE of 4 transmission antenna ports can be adapted to any of G0 to G3. A partial coherent UE of 4 transmission antenna ports can be adapted to any of G0 to G6.

A UE supporting mode 2 may apply power scaling factor = 1 for a TPMI precoder reported as the TPMI group. Moreover, the power scaling factor can mean a coefficient portion (e.g., "1/2" in the case of Fig. 1) that is multiplied by a matrix portion having elements with an absolute value of 1 in the precoding matrix corresponding to the TPMI specified by DCI. The power scaling factor can also be referred to as a scaling value or the like.

For a TPMI precoder other than that reported as the TPMI group, in a case where only one SRS resource is configured in an SRS resource set of which the usage is a codebook, a UE supporting mode 2 may assume the above-mentioned power scaling factor = √ (the number of non-zero PUSCH antenna ports/the number of SRS ports).

Here, the non-zero PUSCH antenna port can mean an antenna port having non-zero PUSCH transmission power or an antenna port whose value is not zero (e.g., 1 or j) among the antenna ports whose transmission is represented by the precoding matrix (codebook subset).

For a TPMI precoder other than that reported as the TPMI group, in a case where two or more SRS resources are configured in an SRS resource set of which the usage is a codebook, a UE supporting mode 2 may assume the above-mentioned power scaling factor = √ (the number of non-zero PUSCH antenna ports of an SRS resource indicated by an SRI/the number of SRS ports of the SRS resource indicated by the SRI).

The UE can apply the determined (or assumed) power scaling factor to the precoding matrix to transmit PUSCH at full power. In other words, the UE can transmit PUSH at full power by using a matrix obtained by multiplying the matrix portion of the precoding matrix by the power scaling factor.

Moreover, the power scaling factor can mean a ratio for scaling a linear value of the PUSCH transmission power determined on the basis of Path-loss or the like. In this case, the squared value of the power scaling factor described so far can correspond to the ratio (can be used interchangeably). The UE can split the linear value of the PUSCH transmission power scaled using the ratio equally across the non-zero PUSCH antenna ports.

In view of the foregoing, to the extent of the specification studies so far, a UE that reports mode 2 but does not report a TPMI group can perform full power transmission in the case of a TPMI indicated by an SRS resource with the number of SRS ports (nrofSRS-Ports) = 1. In a case where antenna switching is possible, for the full power transmission it is sufficient that at least one full-rated PA be provided.

Further, to the extent of the specification studies so far, a UE that reports mode 2 but does not report a TPMI group cannot perform full power transmission in the case of a TPMI indicated by an SRS resource other than those with the number of SRS ports (nrofSRS-Ports) = 1. For example, a UE that is configured with an SRS resource set having two SRS resources corresponding only to the number of SRS ports = 2 or 4 cannot perform full power transmission.

However, whether or not the UE needs to necessarily transmit capability information regarding a TPMI group has not yet been studied. In a case where the capability information is not transmitted, to the extent of the specification studies so far, the UE cannot appropriately perform full power transmission. The inability to perform full power transmission may cause, for example, a decrease in coverage, which leads to difficulty in an increase in communication throughput.

Thus, the inventors have conceived a control method of appropriately performing full power transmission. According to one aspect of the present disclosure, it is possible to perform uplink multi-input multi-output (UL MIMO) transmission with full power, maintaining a cell coverage similar to a single antenna. In addition, according to UL MIMO, spatial diversity gain can be obtained, which can be expected throughput improvement.

Hereinafter, embodiments according to the present disclosure will be described in detail with reference to the drawings. The radio communication methods according to the embodiments may be applied alone or in combination.

Moreover, the terms "antenna" and "antenna port" in embodiments below can be used interchangeably.

In the present disclosure, the term "full power" may be replaced with "power boosting", "maximum power", "extended power", "power higher than that of Rel-15 UE", and the like.

Further, in the present disclosure, the phrase "having UE capability X" (X = 1, 2, or 3) may be replaced with reporting UE capability X, performing full power transmission using the configuration of UE capability X, and the like.

In the present disclosure, the phrase "having coherent capability" (e.g., fully coherent, partial coherent, and non-coherent) may be replaced with reporting the capability, being configured with coherent, and so on.

Further, a non-coherent UE, a partial coherent UE, and a fully coherent UE may be replaced with a UE having capability relating to non-coherent, a UE having capability relating to partial coherent, and a UE having capability relating to fully coherent, respectively.

Further, the non-coherent UE, the partial coherent UE, and the fully coherent UE can refer to UEs in which codebook subsets of "nonCoherent", "partialAndNonCoherent", and "fullyAndPartialAndNonCoherent" are configured in the upper layer, respectively. Moreover, in the present disclosure, "codebook subset" and "codebook" can be used interchangeably.

The non-coherent UE, the partial coherent UE, and the fully coherent UE can refer to UEs capable of transmitting using the non-coherent codebook, the partial coherent codebook, and the fully coherent codebook, respectively.

In the following respective embodiments, mode 1 or 2 is described as having a usage related to the SRS resource set of the codebook, but is not limited to this example. In the respective embodiments, modes 1 or 2 may be replaced with, for example, mode 1 or 2 for SRS resource sets whose usage is non-codebook.

Note that in the present disclosure, "TPMI = matrix of X", "TPMI = X", and "TPMI index = X" may be replaced with each other. Further, the non-coherent codebook and the partial coherent codebook can also be referred to as an antenna selection precoder. The fully coherent codebook can also be referred to as a non-antenna selection precoder. A TPMI corresponding to an antenna selection precoder may be referred to as an antenna selection TPMI. A TPMI corresponding to a non-antenna selection precoder may be referred to as a non-antenna selection TPMI.

In the present disclosure, a "TPMI precoder", a "TPMI group", "one or more TPMIs", a "TPMI group enabling full power", a "TPMI group supporting full power", and the like may be replaced with each other.

In the present disclosure, "support...", "report having the capability of... to the network", and the like may be replaced with each other.

In the present disclosure, capability information indicating that mode X (X is an integer; for example, X = 0, 1, or 2) is supported may be referred to as mode X capability information. For example, the capability information indicating that X = 0, 1, 2) is supported may be referred to as mode X capability information. Further, the "ability information" in the present disclosure may be simply replaced with "information".

### (Radio communication method)

### <First Embodiment>

A first embodiment relates to a UE supporting mode 2.

The UE supporting mode 2 may assume that reporting the capability information regarding the TPMI group (hereinafter, also referred to as TPMI group capability information) is an optional feature. For example, the UE may report TPMI group capability information in a case where from the network it is instructed to report a TPMI group (in other words, it has received a TPMI group capability information reporting instruction). Further, the UE need not report TPMI group capability information to the network at all.

Note that a UE supporting mode 2 in the first embodiment may be replaced with a UE supporting both modes 1 and 2, or may be replaced with a UE supporting UE capability 1. Note that UE capability 1 may be referred to as mode 0.

Hereinafter, the "UE" of the first embodiment is described on the premise of a "UE that supports mode 2 and does not report TPMI group capability information"; however, the UE is not limited thereto. The "UE" of the first embodiment may be a "UE that supports mode 2 and has received a TPMI group capability information reporting instruction".

Further, the "UE supporting mode 2" of the present disclosure may be a "UE supporting only mode 2 out of modes 1 and 2", or may be a "UE supporting both modes out of modes 1 and 2". By employing either, the UE to which the assumption of the following embodiment is applied can be more limited, and therefore UE processing is facilitated.

### [Configuration of SRS resource]

In a case where mode 2 is configured from the network, the UE may assume that for an SRS resource set of which the usage is a codebook, at least one SRS resource is configured with the number of SRS ports (nrofSRS-Ports) = 1. In a case where no SRS resource with the number of SRS ports = 1 is configured, full power transmission could not be performed even though full power of mode 2 is configured; however, in the case of the above assumption, such a situation does not occur.

For example, in a case where mode 2 is configured from the network, the UE may assume that for an SRS resource set of which the usage is a codebook, SRS resource #0 with the number of SRS ports = 1 and SRS resource #1 with the number of SRS ports = 2 or 4 are configured.

For example, when mode 2 is not configured from the network, the UE may receive the TPMI group capability information reporting indication using higher layer signaling, physical layer signaling, or a combination thereof. The network may configure mode 2 for the UE only after the UE reports TPMI group capability information on the basis of the TPMI group capability information reporting instruction.

Even in a case where mode 2 is configured from the network, the UE may assume that for an SRS resource set of which the usage is a codebook, no SRS resource with the number of SRS ports (nrofSRS-Ports) = 1 is configured (in other words, for the SRS resource set, the number of SRS ports of each of all the SRS resources is two or more).

Note that the UE may assume full power transmission in a case where power scaling factor = 1, and need not assume full power transmission in a case where the power scaling factor is any other value (for example, 1/2 or 1/4).

According to the aspect described above, a configuration of an SRS resource allowing full power transmission can be clarified.

### [TPMI for which full power transmission is assumed]

In the following, it is premised that the UE has at least one full-rated PA (for example, for a power class 3 UE, a PA capable of outputting up to 23 [dBm]) (in other words, has UE capability 3).

In a case where mode 2 is configured from the network, the UE may make assumption about full power transmission of at least one of the following (1) to (3):
(1) assuming full power transmission (scaling factor = 1) in a case where TPMI = 0 (in other words, one specific TPMI among the TPMIs corresponding to a non-coherent codebook) is indicated for single-layer (rank 1) transmission using 2 antenna ports or 4 antenna ports;
(2) assuming full power transmission (scaling factor = 1) in a case where TPMI = 0 or 1 (in other words, any TPMI among the TPMIs corresponding to a non-coherent codebook) is indicated for single-layer (rank 1) transmission using 2 antenna ports; and
(3) assuming full power transmission (scaling factor = 1) in a case where TPMI = 0, 1, 2, or 3 (in other words, any TPMI among the TPMIs corresponding to a non-coherent codebook) is indicated for single-layer (rank 1) transmission using 4 antenna ports.

In a case where a TPMI not falling under all of the above (1) to (3) is indicated, the UE may apply the above-described agreed power scaling (for example, apply power scaling factor = (the number of non-zero PUSCH antenna ports/the number of SRS ports) or power scaling factor = (the number of non-zero PUSCH antenna ports of an SRS resource indicated by an SRI/the number of SRS ports of the SRS resource indicated by the SRI)).

With regard to the above (1), the UE may assume that it has implicitly reported TPMI = 0 as TPMI group capability information. With regard to the above (2), the UE may assume that it has implicitly reported TPMI = 0 or 1 (or 0 and 1) as TPMI group capability information. With regard to the above (3), the UE may assume that it has implicitly reported TPMI = 0, 1, 2, or 3 (or 0, 1, 2, and 3) as TPMI group capability information.

The TPMI of the above (1) to (3) for which full power transmission is assumed may be referred to as a default TPMI for full power transmission or the like.

The "TPMI corresponding to a non-coherent codebook" of the above (1) to (3) may be replaced with an "antenna selection TPMI".

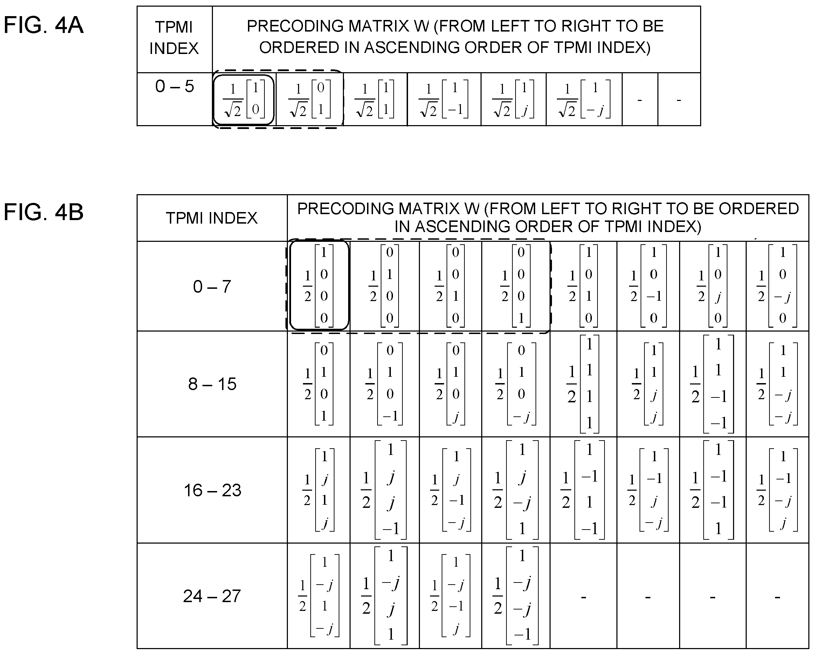

Figs. 4A and 4B are diagrams illustrating examples of TPMIs for which full power transmission is assumed. Fig. 4A shows precoding matrices for single-layer transmission using 2 antenna ports. The portion surrounded by the solid line of Fig. 4A indicates TPMI = 0 of the above (1), and the portion surrounded by the broken line of Fig. 4A indicates TPMI = 0 or 1 of the above (2).

Fig. 4B shows precoding matrices for single-layer transmission using 4 antenna ports in a case where transform precoding = invalid. The portion surrounded by the solid line of Fig. 4B indicates TPMI = 0 of the above (1), and the portion surrounded by the broken line of Fig. 4B indicates TPMI = 0, 1, 2, or 3 of the above (3). Note that although Fig. 1 shows precoding matrices for single-layer transmission using 4 antenna ports in a case where transform precoding = valid, also in this case similarly a TPMI for which full power transmission is assumed may be specified on the basis of the above (1) or (3).

Note that the above (2) and (3) may be applied to a case where the UE can switch the correspondence (or connection) between the antenna port and the PA by using antenna switching (for example, the UE has reported UE capability information regarding the support of antenna switching for full power transmission). In this case, in a case where a precoding matrix designated by a TPMI included in DCI uses a transmission antenna port having a non-full-rated PA (or not having a full-rated PA), the UE may assume that it switches a full-rated PA to the antenna port and performs transmission so that the total transmission power of the ports becomes the UE maximum transmission power P (that is, by using full power).

The UE may be configured, activated, or instructed with which assumption of (1) to (3) above is applied on the basis of higher layer signaling (e.g., RRC signaling, and MAC CE), physical layer signaling (e.g., DCI), or a combination thereof.

Note that a UE having no full-rated PA unlike the above premise (that is, a UE of UE capability 2), in a case where it supports mode 2, may necessarily report TPMI group capability information to the network. Here, the "UE of UE capability 2" of the present disclosure may be replaced with a "UE that cannot perform full power transmission with a single antenna without using virtualization", a "UE not having a PA satisfying the maximum output of the corresponding power class", or the like.

According to the aspect described above, whether or not the UE has no full-rated PA can be notified to the network by means of whether or not the UE has reported TPMI group capability information (in a case where the UE has reported, it has no such PA).

According to the first embodiment described above, by virtue of the fact that a mode 2 UE does not report TPMI group capability information, the number of SRS ports configurable in the UE can be implicitly notified to the network. Further, since TPMI group capability information, the number of SRS ports configurable, etc. are not reported, the overhead required to transmit UE capability information can be reduced.

### <Second Embodiment>

A second embodiment relates to TPMI group capability information of a UE supporting mode 2.

The UE may assume that the TPMI group capability information indicates any of the groups discussed in the conventional standards (G0 to G6) or a combination thereof.

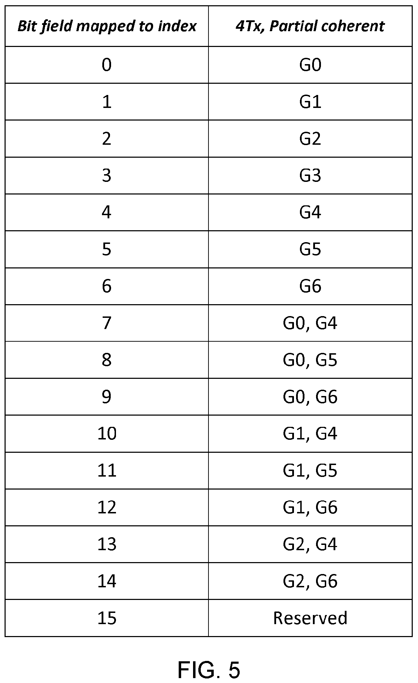

Fig. 5 is a diagram illustrating an example of TPMI groups indicated by TPMI group capability information. In this example, a correspondence between a value of 4-bit TPMI group capability information ("Bit field mapped to index" of the drawing) that a partial coherent UE having 4 transmission antenna ports (4Tx) can report and a corresponding group is shown.

In Fig. 5, each of the values of the bit field of 0 to 6 corresponds to one group (G0 to G6). On the other hand, each of the values of the bit field of 7 to 14 corresponds to a combination of two groups. Note that although reservation ("Reserved") is prescribed for the value of the bit field of 15, the configuration is not limited thereto.

Note that the UE may assume that there is a case where the TPMI group capability information indicates a new group different from the groups discussed in the conventional standards. For example, a combination of existing groups may be indicated as a new group; for example, group G7 may indicate a combination of groups G0 and G4. That is, any combination of two groups of Fig. 5 may be replaced with a new group.

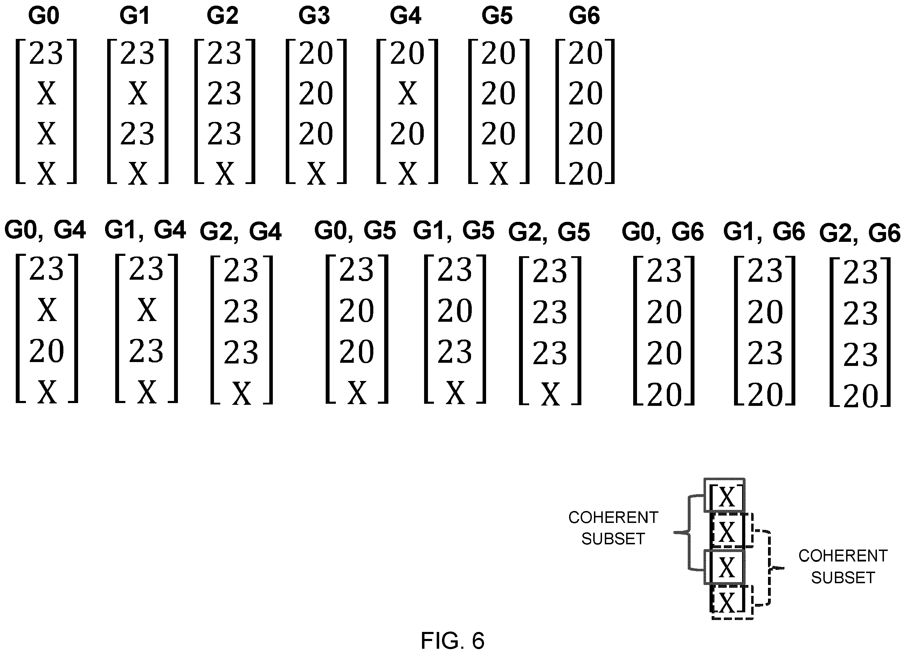

Fig. 6 is a diagram illustrating examples of a PA configuration of UE corresponding to each group or a combination of groups. This example may be a PA configuration assumed by a partial coherent UE. For each example, the maximum output powers of PAs corresponding to antenna ports 0, 1, 2, and 3 are shown from the top. Note that antenna ports 0 and 2 may correspond to a coherent subset (for example, panels having a mutually coherent relationship). Further, antenna ports 1 and 3 may correspond to another coherent subset. Note that ports 0, 1, 2, and 3 are merely port numbers for convenience, and each may correspond to an arbitrary port number.

G0 to G6 indicate the following PA configurations, respectively.
- G0: port 0 is 23 dBm,
- G1: each of ports 0 and 2 is 23 dBm,
- G2: each of ports 0, 1, and 2 is 23 dBm,
- G3: each of ports 0, 1, and 2 is 20 dBm,
- G4: each of ports 0 and 2 is 20 dBm,
- G5: each of ports 0, 1, and 2 is 20 dBm, and
- G6: each of ports 0, 1, 2, and 3 is 20 dBm.

Note that "X" in Fig. 6 may mean that it is not assumed as a combination of ports for full power transmission, or may mean that it is smaller (for example, 0) than the other values in the same matrix. The UE may apply full power transmission by using a port that is not "X" in a matrix. Further, G3 and G5 may indicate the same PA configuration (applicable ranks are different).

For G0 to G2, the UE may assume that the port corresponding to "23" allows full power transmission by itself. For G3 to G6, the UE may assume that full power transmission can be performed by using two or more ports each corresponding to "20".

Note that in a case where a partial coherent UE has reported only G1, the UE may assume that it does not support full power transmission using both ports 0 and 2 for single-layer transmission.

For G1, the UE may assume that each of ports 0 and 2, which are coherent with each other, is 23 dBm, or may assume that each of ports 0 and 1, which are not coherent with each other, is 23 dBm. Such an assumption is effective in that G1 and G4 are separately prescribed on purpose.

The UE may assume that a UE that has reported only G3 does not support single-layer full power transmission. Such an assumption is effective in that G3 and G5 are separately prescribed on purpose.

The combinations of a plurality of groups indicate the following PA configurations, respectively.
- G0, G4: port 0 is 23 dBm, and port 2 is 20 dBm,
- G1, G4: each of ports 0 and 2 is 23 dBm,
- G2, G4: each of ports 0, 1, and 2 is 23 dBm,
- G0, G5: port 0 is 23 dBm, and each of ports 1 and 2 is 20 dBm,
- G1, G5: each of ports 0 and 2 is 23 dBm, and port 1 is 20 dBm,
- G2, G5: each of ports 0, 1, and 2 is 23 dBm,
- G0, G6: port 0 is 23 dBm, and each of ports 1, 2, and 3 is 20 dBm,
- G1, G6: each of ports 0 and 2 is 23 dBm, and each of ports 1 and 3 is 20 dBm, and
- G2, G6: each of ports 0, 1, and 2 is 23 dBm, and port 1 is 20 dBm.

The pair of G1 and G4 looks the same as G1 at a glance; however, as described above, in the case of only G1 it may be assumed that each of ports 0 and 1, which are not coherent with each other, is 23 dBm, and in the case of the pair of G1 and G4 it may be assumed that each of ports 0 and 2, which are coherent with each other, is 23 dBm. Such an assumption is effective in that the pair of G1 and G4, and G1 (or G4) are separately prescribed on purpose.

Further, the pair of G2 and G4 and the pair of G2 and G5 show the same PA configuration. Thus, in Fig. 5, an example in which the pair of G2 and G4 corresponds to the index value of 13 is shown because it is sufficient to show either one of these pairs; however, this may be replaced with the pair of G2 and G5.

Note that the numbers "23" and "20" of the present disclosure are values with the output power of a power class 3 UE in mind, and the number is not limited thereto. "23" may be replaced with a first power value (for example, the maximum output power of a UE of a power class), and "20" may be replaced with a second power value (for example, the value of the maximum output power - 3 [dBm]).

Note that although the second embodiment has shown a prescription of TPMI groups that can be used by a partial coherent UE having 4 transmission antenna ports, the present invention is not limited thereto. For example, a non-coherent UE having 4 transmission antenna ports may perform reporting of TPMI group information, assumption of a PA configuration, etc. by using at least a part of the assumptions of Fig. 5 and Fig. 6.

Further, the correspondence between the value of TPMI group capability information and the corresponding group is not limited to Fig. 5. For example, a 7-bit bitmap in which one bit is allocated to each of G0 to G6 may be employed. In this case, if each of a plurality of bits is 1, the correspondence may refer to a set of groups corresponding thereto.

According to the second embodiment described above, the UE can perform determination, reporting, etc. of detailed PA configuration information by using TPMI group capability information.

### <Others>

Further, in the above-described embodiments, the description is given on UL transmission using the antenna port assuming PUSCH, but the full power transmission of at least one of other signals and channels can be controlled in addition to or in place of PUSCH.

In other words, the antenna port in the above-described respective embodiments can be at least one antenna port of PUSCH (and demodulation reference signal (DMRS) and phase tracking reference signal (PTRS) for PUSCH), a uplink shared channel (physical uplink control channel (PUCCH)), a random access channel (physical random access channel (PRACH)), an SRS, or the like. The full power transmission can be applied to at least one of these signals and channels.

### (Radio communication system)

Hereinafter, a configuration of a radio communication system according to one embodiment of the present disclosure will be described. In this radio communication system, communication is performed using any one of the radio communication methods according to the embodiments of the present disclosure or a combination thereof.

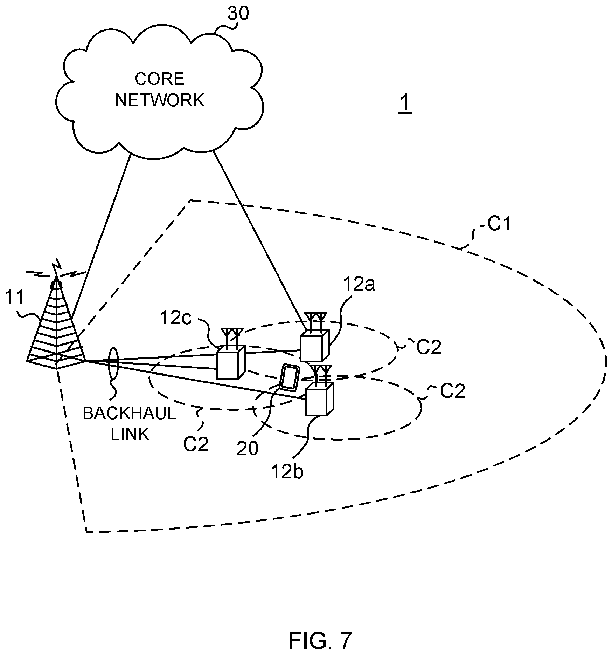

Fig. 7 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in FR1, and the small cell C2 may be included in FR2. For example, FR1 may be a frequency band of 6 GHz or less (sub-6 GHz), and FR2 may be a frequency band higher than 24 GHz (above-24 GHz). Note that the frequency bands, definitions, and the like of FR1 and FR2 are not limited to these, and for example, FR1 may be a frequency band higher than FR2.

Further, the user terminal 20 may perform communication on each CC using at least one of time division duplex (TDD) or frequency division duplex (FDD).

The plurality of base stations 10 may be connected to each other in a wired manner (for example, an optical fiber, an X2 interface, or the like in compliance with common public radio interface (CPRI)) or in a radio manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user terminal 20 may correspond to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. User data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that DCI that schedules PDSCH may be referred to as DL assignment, DL DCI, or the like, and DCI that schedules PUSCH may be referred to as UL grant, UL DCI, or the like. Note that PDSCH may be replaced with DL data, and PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. UE may monitor CORESET associated with a certain search space based on search space configuration.

One search space may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)".

### (Base station)

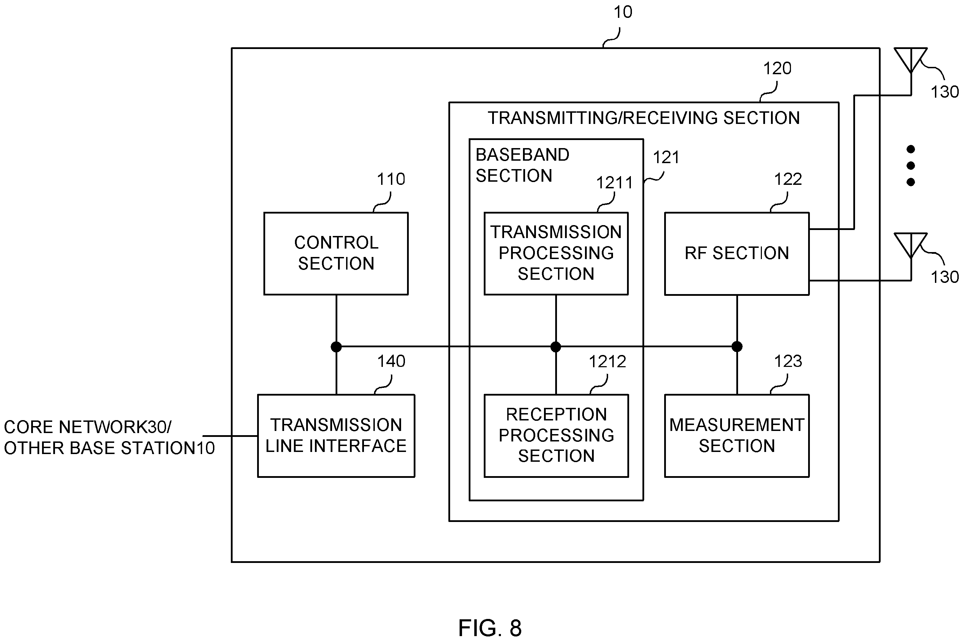

Fig. 8 is a diagram illustrating an example of a configuration of the base station according to one embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmission/reception circuit, and the like, which are described based on common recognition in the technical field to which the present disclosure relates.

The transmitting/receiving section 120 may be constituted as an integrated transmission/reception section, or may be constituted by a transmission section and a reception section. The transmission section may include the transmission processing section 1211 and the RF section 122. The reception section may be constituted by the reception processing section 1212, the RF section 122, and the measurement section 123.

The transmission/reception antenna 130 can be constituted by an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmission section and the reception section of the base station 10 in the present disclosure may be constituted by at least one of the transmitting/receiving section 120, the transmission/reception antenna 130, and the transmission line interface 140.

Moreover, the transmitting/receiving section 120 can receive, from the user terminal 20, at least one of capability information representing a mode for full power transmission to be supported (e.g., mode 1 or 2) and capability information representing a group of transmitted precoding matrix indicators (TPMIs) that support full power transmission.

### (User Terminal)

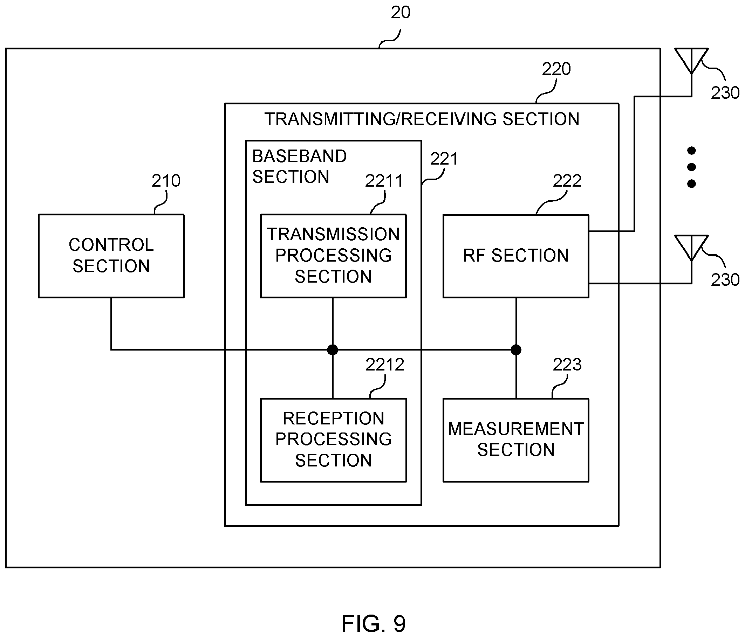

Fig. 9 is a diagram illustrating an example of a configuration of the user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 220 may be formed as an integrated transmission/reception section, or may include a transmission section and a reception section. The transmission section may include the transmission processing section 2211 and the RF section 222. The reception section may be configured by the reception processing section 2212, the RF section 222, and the measurement section 223.

The transmission/reception antenna 230 can include an antenna that is described on the basis of common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a certain channel (for example, PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency range, filtering processing, amplification, and the like on the baseband signal, to transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmission section and the reception section of the user terminal 20 in the present disclosure may include at least one of the transmitting/receiving section 220 or the transmission/reception antenna 230.

Note that the transmission section (the transmitting/receiving section 220) may transmit mode 2 capability information indicating that mode 2 of full power transmission is supported. Note that the mode 2 capability information may be replaced with modes-1-and-2 capability information indicating that mode 1 and mode 2 are supported, or may be replaced with mode 0 capability information indicating that mode 0 (UE capability 1) is supported.

In a case where the mode 2 capability information is transmitted and transmitted precoding matrix indicator (TPMI) group capability information regarding a TPMI group is not transmitted, the control section 210 may assume that the number of SRS ports = 1 is configured for at least one SRS resource included in a measurement reference signal (sounding reference signal (SRS)) resource set of which the usage is a codebook.

In a case where the transmission section (the transmitting/receiving section 220) has transmitted the mode 2 capability information but mode 2 is not configured, the transmission section may transmit the TPMI group capability information.

In a case where mode 2 is configured and a TPMI corresponding to a precoding matrix in which only one component of each column is not 0 is designated for single-layer transmission, the transmission section (the transmitting/receiving section 220) may transmit a physical uplink shared channel (PUSCH) with full power by using a precoder based on the TPMI.

When transmitting the mode 2 capability information and the TPMI group capability information, the transmission section (the transmitting/receiving section 220) may transmit information indicating a set of TPMI groups as the TPMI group capability information.

### (Hardware configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be achieved by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and so on. For example, a functional block (component) that has a transmission function may be referred to as a transmission section (transmitting unit), a transmitter, and the like. In any case, as described above, the implementation method is not particularly limited.

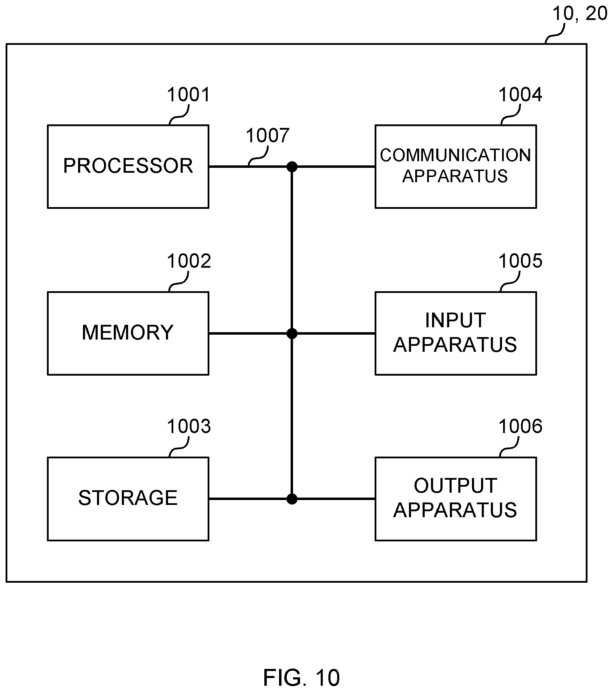

For example, the base station, the user terminal, or the like according to one embodiment of the present disclosure may function as a computer that executes the processing of the radio communication method in the present disclosure. Fig. 10 is a diagram illustrating an example of a hardware configuration of the base station and the user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is shown, a plurality of processors may be provided. Further, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by, for example, reading predetermined software (program) into hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program codes), software modules, data, and so on from at least one of the storage 1003 or the communication apparatus 1004 into the memory 1002, and executes various processing according to these. As the program, a program that causes a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmitting/receiving device) for performing inter-computer communication via at least one of a wired network or a radio network, and for example, is referred to as "network device", "network controller", "network card", "communication module", and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmission/reception antenna 130 (230), and the like described above may be implemented by the communication apparatus 1004. The transmitting/receiving section 120 (220) may be implemented by physically or logically separating the transmission section 120a (220a) and the reception section 120b (220b) from each other.

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, these pieces of apparatus, including the processor 1001, the memory 1002, and so on are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may be formed with one or more durations (frames) in the time domain. Each of the one or more periods (frames) included in the radio frame may be referred to as a subframe. Further, the subframe may include one or more slots in the time domain. A subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, and the like.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

A slot may include a plurality of mini slots. Each mini slot may include one or more symbols in the time domain. Further, the mini slot may be referred to as a sub slot. Each mini slot may include fewer symbols than the slot. A PDSCH (or PUSCH) transmitted in a time unit larger than the mini slot may be referred to as "PDSCH (PUSCH) mapping type A". A PDSCH (or PUSCH) transmitted using a mini slot may be referred to as "PDSCH (PUSCH) mapping type B".

A radio frame, a subframe, a slot, a mini slot, and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot", and so on, instead of a "subframe".

Here, a TTI refers to the minimum time unit of scheduling in radio communication, for example. For example, in the LTE system, a base station performs scheduling to allocate radio resources (frequency bandwidth, transmission power, and the like that can be used in each user terminal) to each user terminal in TTI units. Note that the definition of TTIs is not limited to this.

The TTI may be the transmission time unit of channel-encoded data packets (transport blocks), code blocks, codewords, and so on, or may be the unit of processing in scheduling, link adaptation, and so on. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI", one or more TTIs (that is, one or more slots or one or more mini slots) may be the minimum time unit of scheduling. Also, the number of slots (the number of mini slots) to constitute this minimum time unit of scheduling may be controlled.

TTI having a period of 1 ms may be referred to as usual TTI (TTI in 3GPP Rel. 8 to 12), normal TTI, long TTI, a usual subframe, a normal subframe, a long subframe, a slot, or the like. A TTI that is shorter than the usual TTI may be referred to as "shortened TTI", "short TTI", "partial TTI" (or "fractional TTI"), "shortened subframe", "short subframe", "mini slot", "sub-slot", "slot", or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined based on numerology.

Also, an RB may include one or more symbols in the time domain, and may be one slot, one mini slot, one subframe, or one TTI in length. One TTI, one subframe, and the like may be each formed with one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE does not need to assume to transmit or receive a predetermined signal/channel outside the active BWP. Note that "cell", "carrier", and the like in the present disclosure may be replaced with "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, the information and parameters described in the present disclosure may be represented in absolute values, represented in relative values with respect to given values, or represented using other corresponding information. For example, a radio resource may be specified by a predetermined index.

The names used for parameters and so on in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using a variety of different technologies. For example, data, instructions, commands, information, signals, bits, symbols, and chips, all of which may be referenced throughout the herein-contained description, may be represented by voltages, currents, electromagnetic waves, magnetic fields or particles, optical fields or photons, or any combination of these.

Also, information, signals, and the like can be output at least either from higher layers to lower layers, or from lower layers to higher layers. Information, signals, and so on may be input and output via a plurality of network nodes.

The information, signals, and so on that are input and/or output may be stored in a specific location (for example, in a memory), or may be managed in a control table. The information, signals, and the like to be input and output can be overwritten, updated, or appended. The output information, signals, and the like may be deleted. The information, signals, and so on that are input may be transmitted to other pieces of apparatus.

Notification of information may be performed not only using the aspects/embodiments described in the present disclosure but also using another method. For example, the notification of information in the present disclosure may be performed using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Also, reporting of predetermined information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a predetermined value).

Software, whether referred to as "software", "firmware", "middleware", "microcode", or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and so on.

Also, software, commands, information and so on may be transmitted and received via communication media. For example, when software is transmitted from a website, a server, or another remote source using at least one of a wired technology (coaxial cable, optical fiber cable, twisted pair, digital subscriber line (DSL), or the like) and a radio technology (infrared rays, microwaves, and the like), at least one of the wired technology or the radio technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station or a mobile station may be referred to as a transmitting apparatus, a receiving apparatus, a radio communication apparatus, or the like. Note that at least one of the base station or the mobile station may be a device mounted on a moving body, a moving body itself, and the like. The moving body may be a transportation (for example, a car, an airplane, or the like), an unmanned moving body (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel and a downlink channel may be replaced with a side channel.

Likewise, the user terminal in the present disclosure may be replaced with a base station. In this case, the base station 10 may be configured to have the functions of the user terminal 20 described above.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented particular order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Reference to elements with designations such as "first", "second", and so on as used in the present disclosure does not generally limit the number/quantity or order of these elements. These designations can be used in the present disclosure, as a convenient way of distinguishing between two or more elements. In this way, reference to the first and second elements does not imply that only two elements may be employed, or that the first element must precede the second element in some way.

The terms "judging (determining)" as used in the present disclosure may encompass a wide variety of operations. For example, "judging (determining)" may be interpreted to mean making judgements and determinations related to judging, calculating, computing, processing, deriving, investigating, looking up, search, inquiry (for example, looking up in a table, database, or another data structure), ascertaining, and so on.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory), and so on.

In addition, to "judge" and "determine" as used herein may be interpreted to mean making judgements and determinations related to resolving, selecting, choosing, establishing, comparing, and so on. In other words, to "judge" and "determine" as used herein may be interpreted to mean making judgements and determinations related to some operation.

In addition, to "judge (determine)" may be replaced with "assuming", "expecting", "considering", and so on.

The "maximum transmission power" described in the present disclosure may mean a maximum value of transmission power, nominal UE maximum transmit power, or rated UE maximum transmit power.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other". Note that the phrase may mean that "A and B are different from C". The terms such as "leave", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, for example, when translations add articles, such as a, an, and the in English, the present disclosure may include that the noun that follows these articles is in the plural.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined based on the description of claims. Consequently, the description of the present disclosure is provided only for the purpose of explaining examples, and should by no means be construed to limit the invention according to the present disclosure in any way.

## Claims

1. A terminal comprising:
a transmission section that transmits mode 2 capability information indicating that mode 2 of full power transmission is supported; and
a control section that, in a case where the mode 2 capability information is transmitted and transmitted precoding matrix indicator (TPMI) group capability information regarding a TPMI group is not transmitted, assumes that a number of SRS ports = 1 is configured for at least one SRS resource included in a measurement reference signal (sounding reference signal (SRS)) resource set of which usage is a codebook.

2. The terminal according to claim 1, wherein in a case where the transmission section has transmitted the mode 2 capability information but mode 2 is not configured, the transmission section transmits the TPMI group capability information.

3. The terminal according to claim 1 or 2, wherein in a case where mode 2 is configured and a TPMI corresponding to a precoding matrix in which only one component of each column is not 0 is designated for single-layer transmission, the transmission section transmits a physical uplink shared channel with full power by using a precoder based on the TPMI.

4. The terminal according to any one of claims 1 to 3, wherein when transmitting the mode 2 capability information and the TPMI group capability information, the transmission section transmits information indicating a set of TPMI groups as the TPMI group capability information.

5. A radio communication method for a terminal, the method comprising:
a step of transmitting mode 2 capability information indicating that mode 2 of full power transmission is supported; and
a step of, in a case where the mode 2 capability information is transmitted and transmitted precoding matrix indicator (TPMI) group capability information regarding a TPMI group is not transmitted, assuming that a number of SRS ports = 1 is configured for at least one SRS resource included in a measurement reference signal (sounding reference signal (SRS)) resource set of which usage is a codebook.
